# EUROPEAN PATENT SPECIFICATION

(11) **EP 4 686 396 B1**
(45) Date of publication and mention of the grant of the patent: **18.11.2026**
(21) Application number: 24192362.2
(22) Date of filing: 01.08.2024
(51) Int. Cl.: A01D 78/10, A01B 73/04

(54) **TEDDER WITH HYDRAULIC FOLDING MECHANISM AND METHOD FOR ADJUSTING A TEDDER**
KREISELZETTER MIT HYDRAULISCHEM KLAPPMECHANISMUS UND VERFAHREN ZUM EINSTELLEN EINES KREISELZETTERS
FANEUSE AVEC MÉCANISME DE PLIAGE HYDRAULIQUE ET PROCÉDÉ DE RÉGLAGE D'UNE FANEUSE

(43) Date of publication of application: 04.02.2026
(73) Proprietor: Kverneland Group Kerteminde AS, 5300 Kerteminde (DK)
(72) Inventor: Hirt, Christian, 78086 Brigachtal (DE); Lamprecht, Tobias, 78315 Radolfzell (DE)
(74) Representative: Grünecker Patent- und Rechtsanwälte PartG mbB

(56) References cited:
- DE-U1- 202006 008 566
- US-A- 5 220 773
- US-A1- 2016 212 927

## Description

The present invention relates to a tedder with hydraulic folding mechanism and a method for adjusting a tedder.

The working widths of agricultural implements have remarkably increased over the last years. Bigger working widths enable the farmer to cultivate more farming land in a shorter amount of time. This way, beneficial weather periods can be utilised and the workload can be reduced, to increase the efficiency of the farms. In the field of tedding harvested material, the tedding step is typically done serval times to provide dry feed of high quality. Thus, the working widths of tedders have been increasing to up to 10 m and more make the tedding step more efficient.

While the working widths of the agricultural implements increase, the dimensions of public roads are maintained. Thus, the wider implements have to be folded together, to still be transportable on public roads. To comply with the regulations on the maximum dimensions in height and width, tedders are typically folded several times.

Furthermore, in the fieldwork, the implements have to be brought in a headland position for turning or manoeuvring. With mechanically powered machines like tedders, it is especially important that the machine is not folded in the transport position, while the carrier vehicle's power take off is still running, because this would lead to damage in the mechanical drivetrain. To be most efficient, the headland position shall lift the machine above the crop with a rotating driveline while turning. After the turn is completed, the tedding unit is lowered again and continues tedding the crop. To avoid long folding times and several steps to activate and deactivate the driveline an intermediate position, the headland position, is therefore beneficial. This position is between working and transport position.

Complex hydraulic systems have been installed in tedders to achieve different positions and a sufficient folding of the tedder to comply with the regulations of public roads to make the tedder transportable between the fields. The complex hydraulics include the use of several circuits and different cylinders and have high requirements on the control unit of the carrier vehicle. Especially complex two-stroke folding cylinders are used for folding the carrier beams in e.g. a headland and transport position. Moreover, such hydraulic systems are expensive, error-prone and further increase the weight of the tedder. DE 20 2006 008566 U1 discloses a known tedder with foldable frames.

It is the object of the present invention to provide a tedder that is capable of folding into several positions with a simple and low-cost hydraulic system and a respective method.

This object is solved by the features of claims 1 and 15.

According to the invention a tedder comprises a main frame connectable to a carrier vehicle, two pivotable wing arms including at least one carrier beam oriented transversely to the direction of travel, a plurality of rake rotors arranged on the carrier beams for tedding and turning harvested material and a hydraulic system wherein the hydraulic system comprises at least two folding cylinders for folding the wing arms and a pressure closing valve for limiting the hydraulic pressure supplied to the folding cylinders. The hydraulic system further comprises a carrier cylinder for lifting the carrier beams with respect to the main frame, and a valve means that is formed and arranged to bypass the pressure closing valve upon actuation.

With the above-configuration, the tedder can be adjusted in different positions and folded such that e.g. in a headland position the carrier beams are merely lifted enough for turning around on the field while the power take off of the carrier vehicle is still switched on or in a transport position in which the tedder can be transported on public roads, while only one double acting hydraulic connection of the carrier vehicle is required for providing the hydraulic pressure for the hydraulic system. It is advantageous that the hydraulic system is highly compatible with different carrier vehicles and different tedders.

The valve means restricts the folding movement by limiting the pressure of the folding cylinders by the pressure closing valve. This means that the valve means decouples the folding cylinders from the lines having the pressure applied to the hydraulic system such that the folding cylinders are coupled with the pressure closing valve.

According to one embodiment of the tedder, the valve means may be formed and arranged such that when the pressure closing valve is not bypassed by the valve means and a reduced pressure may be supplied to the folding cylinders thereby limiting the movement of the wing arms to a headland position, the movement of the carrier cylinder may be limited in particular by the valve means to limit the movement of the carrier beams especially in a headland position. This way, a headland position can be achieved without using an additional hydraulic circuit from the carrier vehicle. This makes the tedder highly compatible. The valve means has therefore a double function which means by actuating or switching the valve means the folding cylinders and the carrier cylinder both can be brought e.g. in a transport position.

According to one embodiment of the tedder, the carrier cylinder may comprise a first and a second stroke, and the valve means may be formed and arranged to supply pressure to the second stroke of the carrier cylinder.

In particular when the pressure closing valve is not bypassed by the valve means and a reduced pressure is supplied to the folding cylinders, the valve means is in a state wherein the pressure supply to the second stroke of the carrier cylinder is cut off (while the first stroke is not affected and supplied with pressure). Moreover, this means that e.g. in the headland position only the first stroke is supplied with pressure while in the transport position also the second stroke of the carrier cylinder is supplied with pressure.

With this configuration the valve means is blocking the second stroke of the carrier cylinder at the same time as limiting the pressure in the folding cylinders. Upon actuation of the valve means, it is possible to apply pressure to the second stroke of the carrier cylinder and bypass the pressure limiting valve such that the folding cylinders are coupled to the lines having the full pressure applied to the hydraulic system. As a result, the tedder can be further folded together using the same hydraulic circuit while just actuating the valve means. This enables the user to adjust the tedder with only one double acting hydraulic circuit in three different positions.

According to one embodiment of the tedder, the carrier cylinder may be formed as a one-stroke cylinder and the hydraulic system further comprises a movement limiting valve that limits the movement of the carrier cylinder by cutting of the pressure supply, and the valve means may be formed and arranged to bypass the movement limiting valve upon actuation.

The valve means is formed and arranged to bypass the movement of the limiting valve upon actuation wherein in particular when the pressure closing valve is not bypassed by the valve means and a reduced pressure is supplied to the folding cylinders the movement limiting valve is not bypassed by the valve means and is in a state that the pressure supply to the one stroke carrier cylinder is cut.

According to one embodiment of the tedder, the valve means comprises a check-valve and in particular consists of a check-valve and an on/off valve. This way, the complexity costs and weight of the hydraulic system can be further decreased.

According to one embodiment of the tedder, the valve means may comprise a first check valve for supplying pressure to the second stroke of the carrier cylinder or bypassing the movement limiting valve and a second check valve for bypassing the pressure closing valve. As a result, the movement of the folding cylinders and the carrier cylinder can be controlled individually using the same hydraulic circuit.

According to one embodiment of the tedder, the folding cylinders may be double acting folding cylinders. This way, the tedder can also be unfolded (brought from transport position to headland or working position) in uneven terrain.

According to one embodiment of the tedder, the pressure closing valve may be arranged such that while the pressure of the folding cylinders is limited the pressure of the carrier cylinder is not limited by the pressure closing valve. This way for example the whole pressure is available e.g. for the first stroke of the carrier cylinder for movement of the carrier beams.

According to one embodiment of the tedder, the main frame may comprise a carriage with at least one wheel. As a result the weight of the tedder can be carried by the carriage and wheel of the main frame of the tedder and does not have to be carried by the carrier vehicle. Therefore, the requirements for the carrier vehicle, especially the hitch of the carrier vehicle are lower and the compatibility of the tedder is thus further increased.

According to one embodiment of the tedder, the carrier cylinder may be formed for adjusting the carrier beam with respect to the main frame in at least three different positions. As a result the tedder can be used highly flexible, since, for example, the working, headland and transport positions can be taken.

According to one embodiment of the tedder, the hydraulic system may be formed to adjust the tedder
- in a working position if the hydraulic circuit is without pressure,
- in a headland position if the hydraulic circuit is loaded with pressure and the valve means is not actuated, and
- in a transport position if the hydraulic circuit is loaded with pressure and the valve means is actuated.

Without pressure is considered pressure less than 1 bar above atmospheric pressure.

Loading pressure which means the pressure applied to the hydraulic system, may be in particular between 50 bar and 250 bar, typically between 120 bar and 180 bar. This way, the driver can easily move the tedder in the headland position e.g. by actuating the control unit of the hydraulic carrier vehicle, however, the movement is automatically restricted and further folding that would cause damage to the mechanical drivetrain of the tedding units in case the power take off is still switched on, is prevented. In case the transport position is required, the user can actuate the control unit of the hydraulic carrier vehicle together with the valve means.

According to one embodiment of the tedder, the valve means may be formed as an on-off -switch, in particular without retraction. This way, the setting of the valve means can be predefined for folding into headland position or into transport position. Accordingly, the valve means does not have to be actuated each time the tedder is brought into transport position, but can be predefined for a whole working period.

According to one embodiment of the tedder, the valve means may be formed and arranged such that in the headland position the second stroke of the carrier cylinder is decoupled from the pressure of the hydraulic circuit and the first stroke is supplied with pressure such that only the first stroke of the carrier cylinder is retracted and the pressure closing valve limits the pressure of the folding cylinders such that the folding cylinders are partly retracted. This way, the headland position can be provided with the same hydraulic circuit as the transport position.

According to one embodiment of the tedder, wherein the valve means may be formed and arranged such that in the transport position, the second stroke and the first stroke of the carrier cylinder are supplied with pressure such that the first and second stroke of the carrier cylinder are retracted or in case of a one stroke carrier cylinder the movement limiting valve is bypassed and the carrier cylinder is provided with pressure, and the pressure closing valve is bypassed and the folding cylinders are supplied with pressure of the hydraulic system such that the folding cylinders are in particular completely retracted. As a result the transport position can be provided with the same hydraulic circuit as the headland position.

According to one embodiment of the tedder, the hydraulic system may comprise a safety valve that is configured to block pressure from the folding cylinders when the tedder is moved from the transport position into the headland position or the working position for a predetermined time period or range of motion. The predetermined period of time can be set by the user by actively actuating the safety valve after a certain amount of time. Alternatively the range of motion may be defined, for example, by a certain lift of the carrier cylinder. Consequently the carrier cylinder moves the carrier beam out of a support device before the carrier beam is unfolded in a width direction, such a collision of the carrier beam and or rakes with a support device can be avoided. According to one embodiment of the tedder, the valve means and/or the safety valve is formed to be actuated mechanically or electrically. The mechanical or electrical actuation is a simple, effective, cost effective and weight saving actuation method.

According to one embodiment of the tedder, the carrier cylinder is designed as a double-acting cylinder. This way, the carrier beam can be moved upwards against the gravity out of a support device when the tedder is moved from the transport position in the working or headland position. This is especially useful with tedders above a working width of 6 m such that the rotors can be rotated vice versa from a working or headland position into a transport position by the carrier cylinder such that the height of the tedder in the transport position decreases.

The problem is also solved by a method for adjusting the tedder according to claim 15.

With the method according to the invention, the tedder can be adjusted in different positions and folded such that it can be transported on public roads, while only one hydraulic circuit is required from the carrier vehicle.

According to one embodiment of the method, the method may further comprise supplying pressure to only the first stroke of the two stroke carrier cylinder (and not to the second stroke) or in case the carrier cylinder is formed as a one-stroke cylinder pressure is supplied to the carrier cylinder through the movement limiting valve (which limits the movement of the carrier cylinder at a predetermined position), and supplying limited pressure to the folding cylinders to thereby adjust the tedder from a working position in a headland position. The valve means restricts the folding movement by limiting the pressure of the folding cylinders and blocking the second stroke of the carrier cylinder. As a result the movement is by default restricted to the headland position and the drive train of the rotors is not damaged through further folding in case the power take off is still switched on.

According to one embodiment of the method, the method may further comprise actuating the valve means, thereby supplying pressure to the second stroke of the carrier cylinder or bypassing the movement limiting valve, and bypassing the pressure closing valve to thereby adjust the tedder from a working position or a headland position in a transport-position. Upon actuation of the valve means, it is possible to apply pressure to the second stroke of the carrier cylinder and bypass the pressure limiting valve. As a result the tedder can be further folded together using the same hydraulic circuit.

According to one embodiment of the method, the method may further comprise providing the carrier cylinder with pressure and after a predetermined time period or range of motion actuating the safety valve to provide the folding cylinders with pressure to thereby adjust the tedder from a transport position in a headland position or a working position. This way, the carrier beams are moved away from the support on the main frame prior to enfolding of the folding cylinders. This way, the carrier cylinder moves the carrier beam out of a support device before the carrier beam is unfolded in a width direction, such a collision of the carrier beam and or rakes with a support device can be avoided.

There is also provided a hydraulic system.

With the hydraulic system a tedder can be adjusted in different positions and folded such that it can be transported on public roads, while only one hydraulic circuit is required from the carrier vehicle. The hydraulic system is suitable for a tedder according to claims 1 - 14.

The invention is described in further detail below with reference to the figures, using examples of embodiments.
- Figure 1: shows a tedder according to an embodiment of the present invention in a perspective view in a working position.
- Figure 2: shows a tedder according to the embodiment in a side view in a working position.
- Figure 3: shows a tedder according to the embodiment in a side view in a headland position.
- Figure 4: shows a tedder according to the embodiment in a side view in a transport position.
- Figure 5a: shows a hydraulic diagram of a hydraulic system of a tedder according to an embodiment of the present invention.
- Figure 5b: shows the hydraulic diagram of Fig.5a for moving the tedder from a working position in the headland position.
- Figure 5c: shows the hydraulic system of Fig. 5a for moving the tedder from headland in a transport position.
- Figure 5d: shows the hydraulic system of Fig. 5a for moving the tedder from a transport position in a working or headland position.
- Figure 6a: shows the hydraulic system of a tedder according to an embodiment in the working position.
- Figure 6b: shows the hydraulic system of a tedder according to an embodiment in the headland position.
- Figure 6c: shows the hydraulic system of a tedder according to an embodiment in the transport position.

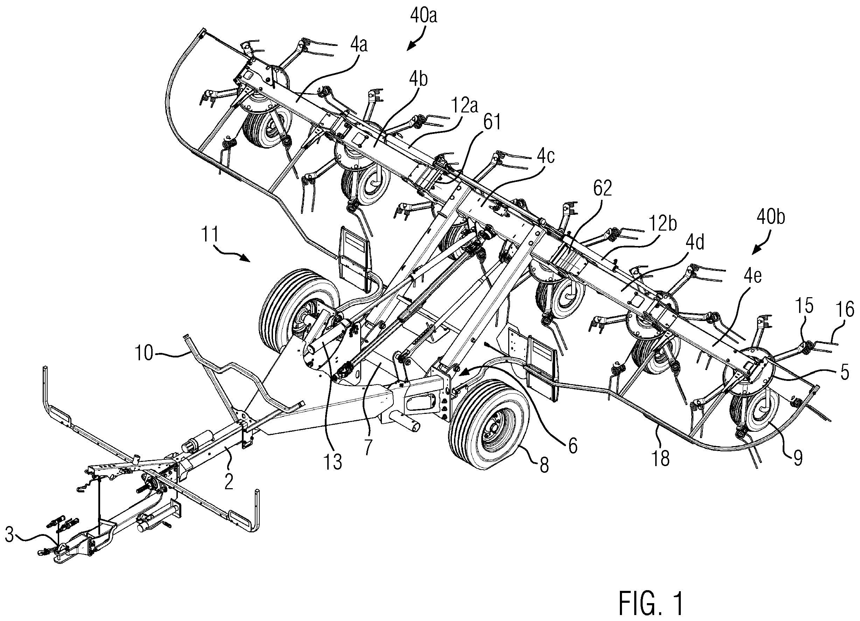

Figure 1 shows a tedder 1 comprising a main frame 2 that can be connected to a carrier vehicle via the hitch interface 3. Other connections like drawbars are also possible. The tedder 1 further comprises two wing arms 40a, 40b including carrier beams 4 a, b and 4d,4e and being oriented transversely to the direction of travel . The carrier beams are carrying the rotors 5. In the embodiment, the tedder 1 comprises five carrier beams 4a-4e, but there are also configurations with three, or more than five carrier beams possible, depending on the number of rotors 5 to be carried. The wing arms 40a, 40b are pivotally fastened, for example, via respective lateral joints 61 and 62. The carrier beams are pivotable fastened to the main frame 2 via a main joint 6. The main joint 6 and the lateral joints 61, 62 can be formed as friction bearings or ball bearings.

The wing sections 40a, 40b are foldable from a horizontal working position (P1), as can be seen by the arrows in Fig 1, upwardly in a headland position (P2) and further in a transport position (P3) where the wing arms 40a, 40b extend in a substantial vertical direction at least in sections which means that at least inner carrier beams 4b and 4d extend substantially vertical. The number and diameter of the rotors 5 may be chosen depending on the required working width and ground adaptively. The tedder 1 may comprise four to fourteen rotors 5, in particular six rotors 5, with a diameter from 1, 40 to 1,70 m. Each rotor 5 may comprise its own rake wheel 9, supporting the respective rotor 5. With the rotor wheels 9, the height of the rotors 5 can be adapted to the ground profile. The rotors 5 may comprise several arms 15, in particular six arms that carry rotor means, here tines 16 to collect and release harvested material and thereby turn the harvested material around.

Safety frames 18 may further be mounted on the carrier beams 4a-4e for protecting the rotor 5. The main frame 2 may further comprise a carriage that carries the main frame 2 and serves as a wheel hub for the main wheels 8. The main wheels 8 may be configured to carry the total weight of the tedder 1, in case the rotor wheels 9 are not in contact with the ground for transport or turning purpose. In case the rotor wheels 9 are in contact with the ground, the main wheels 9 may carry the weight of the main frame 2 and controls the working depth of the rakes.

The carrier beams 4a-4e may extend in a direction orthogonal to the direction of travel X and parallel to a horizontal direction. The direction of travel X is the direction in which the interface 3 that is connectable to the carrier vehicle V faces.

The main frame 2 may further comprise a support device 10 that is configured to carry the carrier beams 4a-4e during transport. The carrier beams may comprise a middle carrier beam 4c that is fixed to the pivot joints 6, in particular via a panel 17, inner carrier beams 4b and 4d extending from the middle carrier beam 4c and outer carrier beams 4a and 4e extending from the inner carrier beams 4b and 4d.

The tedder 1 further comprises a hydraulic system 11 that includes two folding cylinders 12a and 12b and a carrier cylinder 13. The folding cylinders are configured to fold the inner carrier beams 4b and 4d in an upper direction away from the ground with respect to the middle carrier beam 4c such that the wing sections fold inwards and upwards and the width of the tedder 1 can be reduced. To reduce the height and/or length of the folded tedder 1 according to a preferred embodiment the outer carrier beams 4a and 4e can be further folded e.g. towards the inner carrier beams 4b and 4d.

The tedder 1 may comprise a single one stroke folding cylinder 12a/12b for each side that moves the wing sections that means the inner carrier beam 4b/4d together with an outer carrier beam 4a/4e with respect to the middle carrier beam 4c. Alternatively, the tedder 1 may comprise one folding cylinder 12 for each of the outer and inner carrier beams 4a, 4b, 4d and 4e respectively. The folding cylinders 12 may be designed as single-acting cylinders. As a result weight and costs can be saved. The folding cylinders 12 may also be designed as double acting cylinders. This way the tedder 1 can also be unfolded, which means brought from the transport position P3 in the working position P1 on slopes in a save and controlled manner.

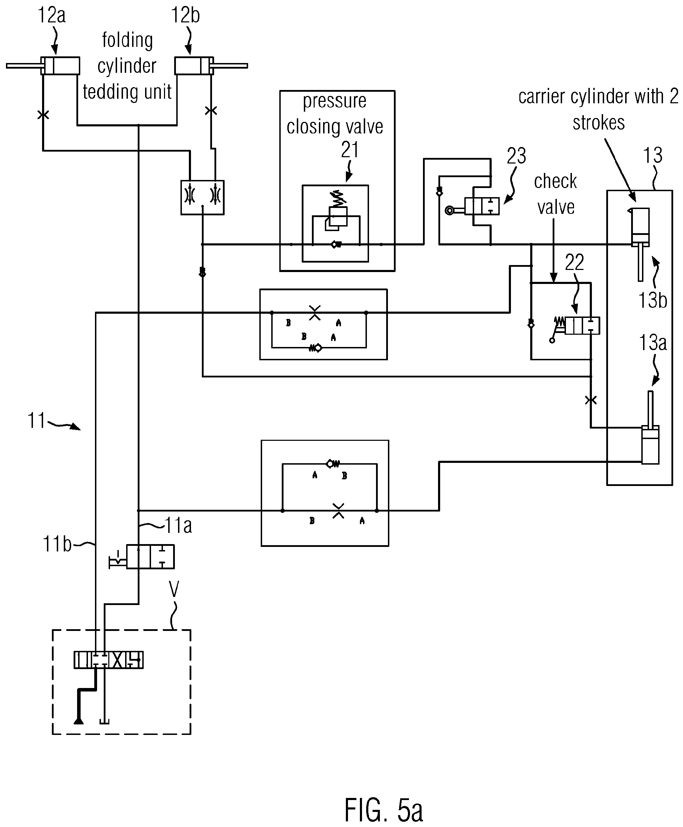

As can e.g. be seen in Fig. 5a the hydraulic system 11 further comprises a pressure closing valve 21 that is configured to limit the pressure in the folding cylinders 12a and 12b. With the reduced pressure, the folding cylinders 12a and 12b cannot move the carrier beams 4a-4e in a completely folded position, but merely lift the carrier beams 4a, 4b, 4d and 4e for up to 10° with respect to the middle carrier beam 4c. As a result the tedder 1 is folded such that it is merely lifted enough for turning around on the field while the power-take-off of the carrier vehicle is still switched on, if the valve means 22 are not actuated or the tedder 1 can be further folded together using the same hydraulic circuit in case the valve means are actuated.

The carrier cylinder 13 is configured to move the carrier beams 4a, 4b, 4d and 4e with respect to the main frame 2. The carrier cylinder 13 pivots the carrier beams 4a, 4b, 4d and 4e around the main joint 6. The carrier cylinder 13 is formed as a two stroke cylinder. As a result the two strokes can be provided with pressure independently to provide different fixed positions.

The carrier cylinder 13 and the folding cylinders 12a and 12b may be integrated in parallel in the same hydraulic circuit 11 that can be provided with pressure from the carrier vehicle and thus are fed through the same supply line.

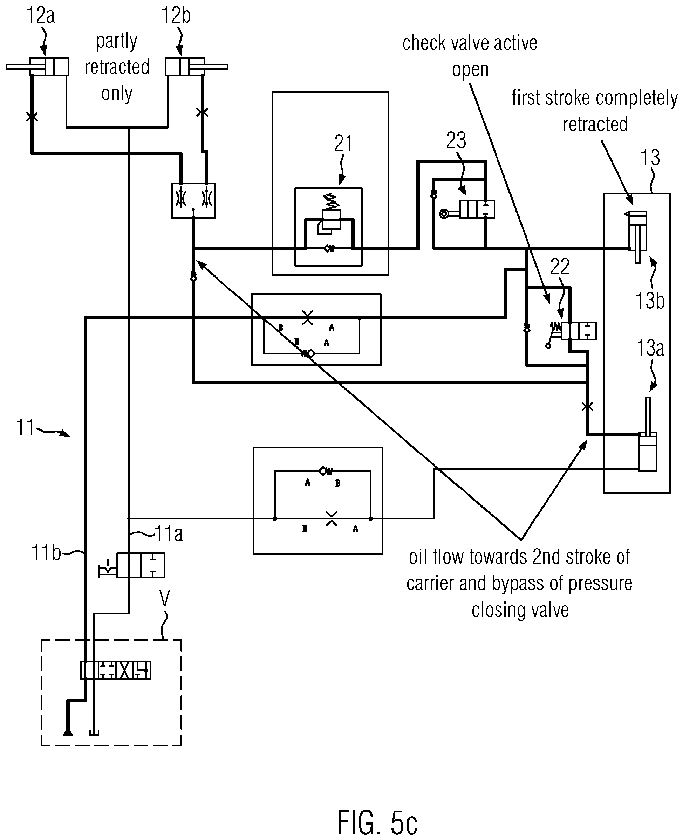

The hydraulic system further comprises valve means 22 that are formed and arranged in the circuit to supply pressure to the second stroke 13a of the carrier cylinder 13 and to bypass the pressure-closing valve 21 upon actuation as can be seen from Fig.5c, that shows the hydraulic system for moving the tedder 1 from a headland in a transport position while the oil flow in the lines is represented by thick lines. Thereby, it is possible to apply pressure to the second stroke of the carrier cylinder 13a and bypass the pressure limiting valve 21. Oil flows with unlimited pressure may flow towards the second stroke 13a, the first stroke 13b and the folding cylinders 12a, 12b.

The valve means may be actuated mechanically, for example, with a Bowden cable or electrically through a electro magnetic valve. The valve means may be configured as two independent switches for bypassing the pressure-limiting valve and supplying pressure to the second stroke of the carrier cylinder 13. This way, the user can individually control the respective movements of the folding mechanism. Alternatively, the valve means may be configured as a single switch for bypassing the pressure-limiting valve 21 and supplying pressure to the second stroke of the carrier cylinder 13a to save costs and weight.

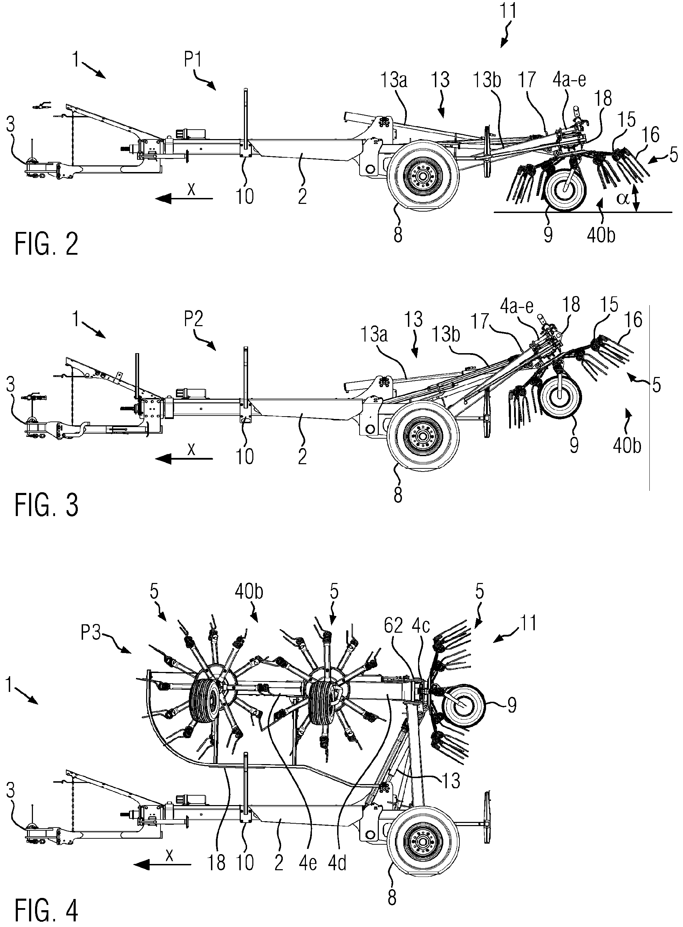

Figure 2 shows the tedder 1 from a side view in a working position P1 with the rotor wheels 9 touching the ground and the carrier beams 4a-4e fully unfolded. In the working position P1, the rotor means 16 are positioned such that they are close enough to the ground to collect the harvested material. The height of the rotor means 16 with respect to the ground may be adjustable. Furthermore, the angle of the rotors 5 with respect to the ground plain when viewed from a side perspective can be adjustable, in particular between 10 ° and 25 ° to adjust the collecting and releasing of harvested material and thus the turning process.

To provide the working position, P1, as can be seen in Fig. 5a, the hydraulic system 11 may be without pressure, in particular less than 1 bar above atmospheric pressure such that the weight of the carrier beams 4a-4e and the rotors 5 is fully loaded on the rotor wheels 9. The carrier cylinder 13 and the folding cylinders 12a-12b may not be completely extended, in particular only 90%, if the tedder 1 is brought in the working position P1 on plane ground such that there is still lift left to compensate an uneven ground profile and ensure good ground adaption. The cylinders 12 a, b can also be configured as double acting cylinders which are partly or fully extended working in a long hole slot to allow movement of uneven ground profiles.

The main wheels 8 may be positioned in the direction of travel X with respect to the rotor.

Figure 3 shows the tedder 1 in a headland position P2, in which the rotors 5 and rotor wheels 9 are moved upwards so that they do no longer touch the ground. The weight of the tedder 1 may be carried by the main wheels 8, while the tedder 1 is in the headland position P2. To move the tedder 1 from the working position P1 in the headland position P2, the hydraulic circuit 11 may be provided with pressure from the carrier vehicle V and the hydraulic circuit is loaded with a pressure e.g. in a range of 120 - 220 bar, while the valve means 22 is not actuated. This way, the first stroke of the carrier cylinder 13b is provided with pressure, thereby lifting the central carrier beam 4c from the ground. Furthermore, the folding cylinders 12a and 12b are provided with limited pressure, in particular limited to a maximum of 75 bar, such that the connection of the single carrier beams 4a-4e is stiffened and the outer rotors 5 are also lifted from the ground. The limited pressure may also fold the wing arms upwards for a maximum angle of 10° with respect to the middle carrier beam 4c but is not sufficient to completely fold the carrier beams 4a, 4b, 4d and 4e. To move the tedder 1 from the headland position P2 into the working position P1, the hydraulic circuit 11 may be made pressureless, in particular pressureless means less pressure than 1 bar above atmospheric pressure.

Figure 4 shows the tedder 1 in a transport position P2, in which the carrier beams 4b and 4d are completely folded and are positioned on the support means 10 of the main frame 2. The weight of the tedder 1 in the transport position P3 may be carried by the main wheels 8.

To move the tedder 1 from the working position P1 or headland position P2 into the transport position P3, the hydraulic circuit 11 may be provided with pressure from the carrier vehicle V, while the valve means are also actuated as can be seen in Fig. 5c. Therefore the full pressure, in particular between 120 bar and 220 bar, is provided to the first stroke of the carrier cylinder 13b and to the folding cylinders 12a and 12b making it possible to fully fold the wing sections including carrier beams 4a, 4b, 4d and 4e with their respective rotors 5. At the same time, the second stroke of the carrier cylinder 13a is provided with pressure and the carrier beams 4a-4e are moved around pivot joint 6, in particular until the safety frame 18 is supported by the support means 10 on the main frame 2. This way the height of the folded carrier beams 4a-4e can be further reduced because the carrier beams 4a-4e are laid down upon the main frame 2.

To move the tedder 1 from the transport position P3 in the headland position P2 or the working position P1, the hydraulic circuit 11 may be operated with a double acting valve in the opposite way as folding from work to transport. As a result the second stroke of the carrier cylinder 13a and the folding cylinders 12a and 12b are provided with pressure such that the first stroke of carrier cylinder 13a is lifting the tedder 1 above the support means 10 and as soon as the valve means 23 is activated the folding cylinders 12a,b are unfolding the carrier beams 4a,b,d,e and the carrier cylinder 13b unfolds automatically due to gravity. In case the tedder 1 is folded such that in the transport position P3 of the tedder 1, the center of weight of the carrier beams 4a-4e with rotors 5 are folded past the main pivot joint 6 in a direction of travel X, the second stroke of the carrier cylinder 13 may be designed as a double acting cylinder. This way, the carrier beams 4a-4e with rotors 5 can be actively pushed at least until their centre of gravity passes the main pivot joint 6 against the direction of travel X.

Figures 5a-5d show a hydraulic diagram of the hydraulic system 11 of the tedder 1, wherein the bold lines show the lines with full hydraulic pressure, which may be between 120 - 220 bar. The doted full lines show the lines with limited hydraulic pressure, which may be less than 75 bar. As described above the hydraulic circuit 11 comprises a check valve 22 as valve means for bypassing the pressure limiter 21 and providing the second stroke of the carrier cylinder 13a with pressure with only one valve of the carrier vehicle. It is also possible to split these functions up to two separate valves.

The second stroke of the carrier cylinder 13a is designed double acting. Depending on the transport position P3 and the geometry of the tedder 1, the second stroke of the carrier cylinder 13a may also be designed single acting.

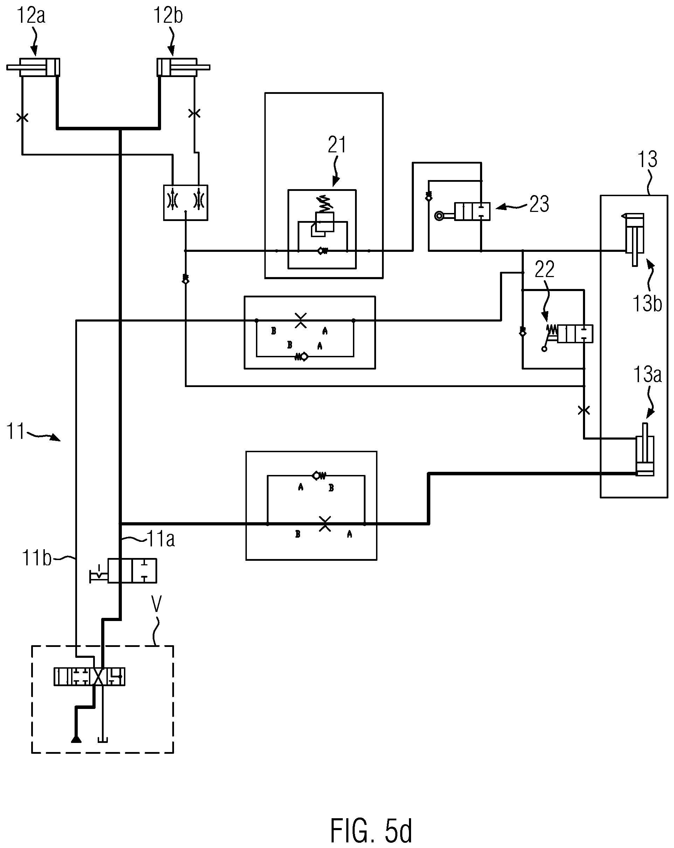

With the hydraulic system 11, the actuation of the tedder 1 can be carried out as follows:
In case the tedder 1 is in a transport position P3 and should be unfolded into the working position P1 for fieldwork, the user may actuate the hydraulic circuit 11 from the carrier vehicle V by supplying pressure to line 11a as shown in Figure 5d. The double acting second stroke 13a of the carrier cylinder may be provided with pressure to extend and thereby lift the carrier beams 4a-4e with the rotors 5 and turn them around the pivot joint 6. At the same time, the first stroke 13b of the carrier beam is connected to the tank line and therefore pressureless.

After the carrier beams 4a-4e with the rotors 5 have been moved out of the support means, a safety valve 23 may be manually or automatically actuated to make the ring chamber of the folding cylinder pressureless as shown in Figure 5a. The folding cylinders 12a, b will extend and the pressureless first stroke of the carrier cylinder is then extended by the force of gravity and the tedder 1 can unfold into the working position P1.

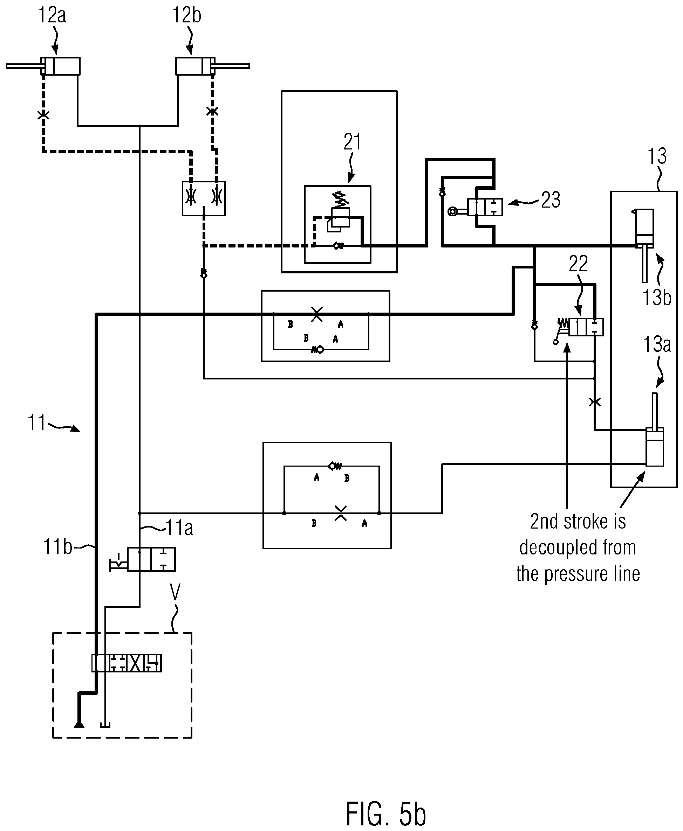

In case the tedder 1 should be brought into the headland position P2 for turning on the field, while the carrier vehicle's power-take-off may remain switched on, the hydraulic circuit 11 may be actuated by the user, thereby giving pressure to line 11b while the check valve 22 is not actuated. This way, the pressure is only applied to the first stroke of the carrier cylinder 13b and the second stroke of the carrier cylinder 13a is not supplied with pressure. Furthermore, the pressure in the folding cylinders 12a and 12b is limited such that the carrier beams 4a, 4b, 4d and 4e cannot be folded completely. This is shown in Figure 5b.

To move the tedder 1 further in the transport position P3, the user may actuate the valve means 22, while supplying line 11b with pressure. This way, the second stroke of the carrier cylinder 13a is supplied with pressure in addition to the first stroke 13b and the pressure closing valve 21 is bypassed, thereby providing the folding cylinders 12a and 12b with full pressure as shown in Figure 5c. Therefore, the tedder 1 can be completely folded together and brought in transport position P3.

For the above described movements of the tedder positions, only one hydraulic circuit 11 is necessary. This way, the tedder 1 is highly compatible with different carrier vehicles V, light weighted and with reduced maintenance, while full functionality is provided.

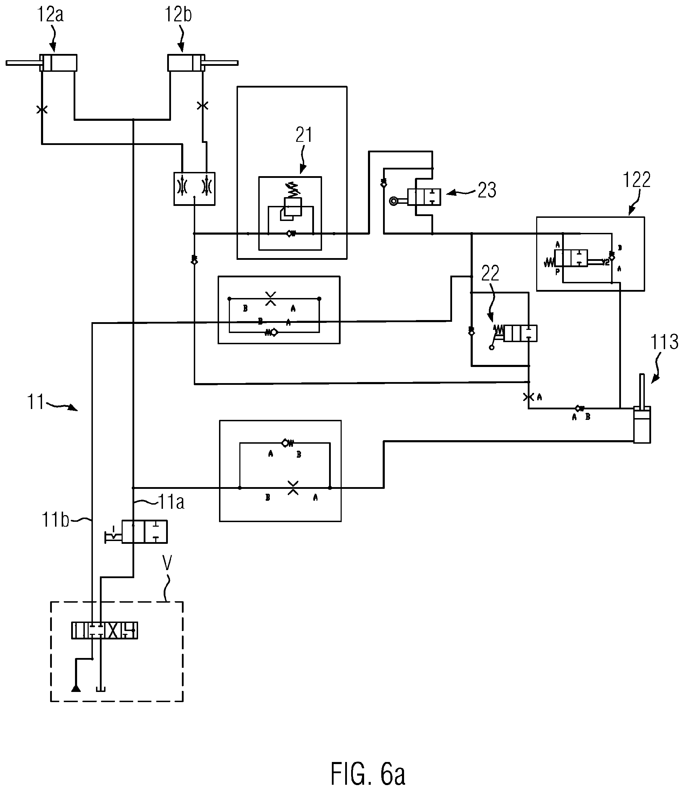

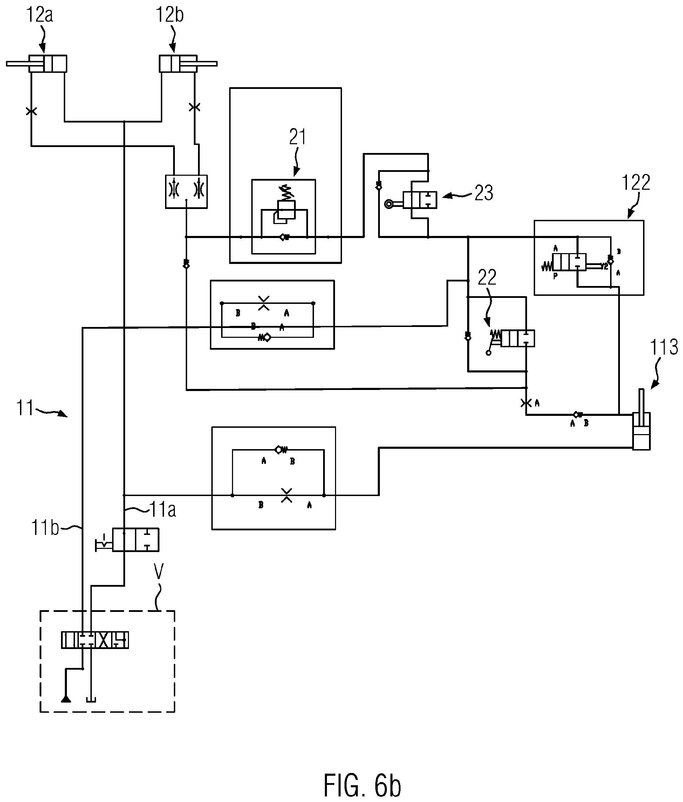

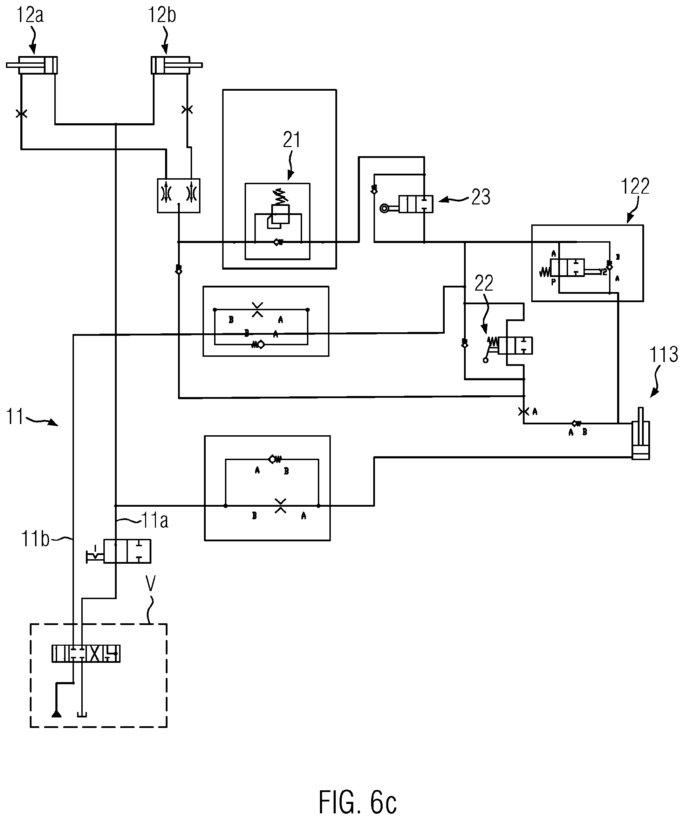

Fig. 6a-6c show a second embodiment of the present invention which basically corresponds to the above embodiment, while as an alternative to the two stroke carrier cylinder 13 the, at least three different positions P1-P3 of the tedder 1 can also be adjusted using a one stroke carrier cylinder 113 with a movement limiting valve 122. Figure 6 a - 6c shows hydraulic diagrams of such an alternative configuration. For ease of representation Figures 6a-6c do not show the respective oil flows, as shown in figures 5, but just show the respective valve and cylinder positions in the working position and for achieving the headland and transport position. The movement limiting valve 122 may stop the contraction of the one stroke carrier cylinder 113 at an intermediate position to adjust the tedder 1 in a headland position P2. At the intermediate position, the movement limiting valve 122 may be actuated, in particular actuated by a mechanical limit stop and cut the one stroke carrier cylinder 113 off from the pressure supply. This way the movement of the one carrier cylinder 113 is stopped. In case the valve means 22 are actuated (and the pressure closing valve 21 is bypassed e.g. for the transport position) the movement limiting valve 122 is bypassed and the one stroke carrier cylinder 113 can be completely contracted to adjust the tedder 1 in a transport position P3. Fig. 6a shows the system in working position, Fig. 6b in headland position and Fig. 6c in transport position. The remaining functions correspond to the first embodiments.

In this application, the expression pressure means hydraulic pressure.

The movement of the one stroke carrier cylinder 113, can also be limited using a mechanical stop member. The mechanical stop member may be designed to limit the retraction of the one stroke carrier cylinder 113 in an intermediate position, in particular to move the tedder 1 in a headland position P2. The mechanical stop member may be designed as a plate that is disposed on a piston of the one stroke carrier cylinder 113. The mechanical stop member may be designed to push against a cylinder housing of the one stroke carrier cylinder 113 such that the movement is limited. The mechanical stop may be portably mounted such that it can be swivelled out of the moving space of the one stroke carrier cylinder 113, such that the one stroke carrier cylinder can be fully retracted, in particular to enable a transport position P3. The movement of the mechanical stop can be actuated by the user, in particular with a cord or a bowden cable.

## Claims

1. A tedder (1) comprising a main frame (2) connectable to a carrier vehicle, two pivotal wing arms (40a, 40b) including at least one carrier beam (4a-4e) respectively oriented transversely to the direction of travel (X) a plurality of rotors (5) arranged on the carrier beams (4a-4e) for tedding and turning harvested material and a hydraulic system (11) wherein
the hydraulic system (11) comprises two folding cylinders (12a, 12b) for folding the wing arms (40a, 40b) and
a pressure closing valve (21) for limiting the hydraulic pressure of the folding cylinders 12a,12b),
wherein the hydraulic system (11) further comprises
a carrier cylinder (13, 113) for lifting the carrier beams (4a-4e) with respect to the main frame (2), and
a valve means (22) that is formed and arranged to bypass the pressure closing valve (21) upon actuation.

2. The tedder according to claim 1, **characterized in that** the valve means (22) is formed and arranged such that
when the pressure closing valve (21) is not bypassed by the valve means (22) and a reduced pressure is supplied to the folding cylinders (12a,12b) thereby limiting the movement of the wing arms (40a,40b) to a headland position (P2),
the movement of the carrier cylinder (13,113) is limited in an intermediate position, the headland position (P2).

3. The tedder according to claim 1 or claim 2, **characterized in that** the carrier cylinder (13) comprises a first and a second stroke (13b, 13a) and
the valve means (22) is formed and arranged to supply pressure to the second stroke of the carrier cylinder (13a) upon actuation,
wherein in particular when the pressure closing valve (21) is not bypassed by the valve means (22) and a reduced pressure is supplied to the folding cylinders (12a,12b) the valve means (22) is in a state wherein the pressure supply to the second stroke (13a) of the carrier cylinder is cut off.

4. The tedder according to claim 1 or 2, **characterized in that** the carrier cylinder (113) is formed as a one-stroke cylinder and the hydraulic system (11) further comprises a movement limiting valve (122), that is formed and arranged to limit the movement of the carrier cylinder (113) by cutting off the pressure supply, and
the valve means (22) is formed and arranged to bypass the movement limiting valve (122) upon actuation wherein
in particular when the pressure closing valve (21) is not bypassed by the valve means (22) and a reduced pressure is supplied to the folding cylinders (12a,12b) the movement limiting valve (122) is not bypassed by the valve means (22) and is in a state that the pressure supply to the one stroke carrier cylinder (113) is cut.

5. The tedder according to any one of claims 1-4, **characterized in that** the valve means (22) comprises a check-valve, in particular consists of a check valve and an on/off valve.

6. The tedder according to any one of claims 1 to 4, **characterized in that** the valve means (22) comprises a first check valve for supplying pressure to the second stroke of the carrier cylinder (13) or bypassing the movement limiting valve (122) and a second check valve for bypassing the pressure closing valve (21).

7. The tedder according to any one of claims 1 to 6, **characterized in that** that the folding cylinders (12a, 12b) are double acting one stroke folding cylinders.

8. The tedder according to any one of claims 1 to 7, **characterized in that** the pressure closing valve (21) is arranged such that pressure of the carrier cylinder (13, 113) can not be limited by the pressure closing valve (21).

9. The tedder according to any one of claims 1 to 8, **characterized in that** the carrier cylinder (13, 113) is formed for adjusting the carrier beams (4a-4e) with respect to the main frame (2) in at least three different positions.

10. The tedder according to any one of claims 1 to 9, **characterized in that** the hydraulic system (11) is formed to adjust the tedder (1),
in a working position (P1) if the hydraulic circuit (11) is without pressure,
in a headland position (P2) if the hydraulic circuit (11) is loaded with pressure and the valve means (22) is not actuated, and
in a transport position (P3) if the hydraulic circuit (11) is loaded with pressure and the valve means (22) is actuated.

11. The tedder according to claim 10, wherein the valve means (22) is formed and arranged such that in the headland position (P2),
the second stroke of the carrier cylinder (13a) is decoupled from the pressure of the hydraulic circuit (11) and the first stroke of the carrier cylinder (13b) is supplied with pressure such that only the first stroke of the carrier cylinder (13b) is retracted and
the pressure closing valve (21) limits the pressure of the folding cylinders (12a, 12b) such that the folding cylinders (12a, 12b) are partly retracted.

12. The tedder according to claims 10 or 11, wherein the valve means is formed and arranged such that in the transport position (P3),
the second stroke and the first stroke of the carrier cylinder (13b, 13a) are supplied with pressure such that the first and second stroke of the carrier cylinder (13b, 13a) are retracted or in case of a one stroke carrier cylinder (113) the movement limiting valve (122) is bypassed and the carrier cylinder (113) is provided with pressure, and
the pressure closing valve (21) is bypassed and the folding cylinders (12a, 12b) are supplied with pressure of the hydraulic system (11) such that the folding cylinders (12a, 12b) are in particular completely retracted.

13. The tedder according to one of claims 10 to 12,
**characterized in that** the hydraulic system (11) comprises a safety valve (23) that is configured to block pressure from the folding cylinders (12a, 12b) when the tedder (1) is moved from the transport position (P3) into the headland position (P2) or the working position (P1) for a predetermined time period or range of motion.

14. The tedder according to at least one of claims 1 to 13, **characterized in that** the valve means (22) and/or the safety valve (23) is formed to be actuated mechanically or electrically, and/or
the carrier cylinder (13, 113) is designed as a double-acting cylinder.

15. A method for adjusting a working, headland or transport position (P1, P2, P3) of the tedder (1) according to one of claims 1 to 14, using hydraulic pressure wherein
in order to adjust the transport position (P3) the valve means (22) is actuated.

16. The method of claim 15 further comprising:
supplying pressure to only the first stroke of the two stroke carrier cylinder (13b) or
in case the carrier cylinder is formed as a one stroke cylinder (113) supplying pressure to the carrier cylinder through a movement limiting valve (122) and
supplying limited pressure to the folding cylinders (12a, 12b)
to thereby adjust the tedder (1) from a working position (P1) in a headland position (P2).

17. The method of claim 15 or 16 further comprising
actuating the valve means (22), thereby supplying pressure to the second stroke of the carrier cylinder (13a) or bypassing the movement limiting valve (122) and bypassing the pressure closing valve (21) to thereby adjust the tedder (1) from a working position (P1) or a headland position (P2) in a transport-position (P3).

18. The method of any one of claims 15 to 17 further comprising
providing the carrier cylinder (13, 113) with pressure and after a predetermined time period or range of motion actuating the safety valve (23) to provide the folding cylinders (12a, 12b) with pressure to thereby adjust the tedder (1) from a transport position (P3) in a headland position (P2) or a working position (P1).

## Patentansprüche

1. Zettwender (1), umfassend einen Hauptrahmen (2), der mit einem Trägerfahrzeug verbunden werden kann, zwei schwenkbare Auslegerarme (40a, 40b), die jeweils wenigstens einen quer zur Fahrtrichtung (X) ausgerichteten Trägerbalken (4a-4e) aufweisen, eine Vielzahl von an den Trägerbalken (4a-4e) angeordneten Rotoren (5) zum Zetten und Wenden von Erntegut sowie ein Hydrauliksystem (11),wobei das Hydrauliksystem (11) zwei Klappzylinder (12a, 12b) zum Klappen der Auslegerarme (40a, 40b) sowie
ein Druckabsperrventil (21) zum Begrenzen des Hydraulikdrucks der Klappzylinder (12a, 12b) umfasst,
wobei das Hydrauliksystem (11) des Weiteren
einen Trägerzylinder (13, 113) zum Anheben der Trägerbalken (4a-4e) in Bezug auf den Hauptrahmen (2), und
eine Ventileinrichtung (22) umfasst, die so ausgebildet und angeordnet ist, dass sie bei Betätigung das Druckabsperrventil (21) umgeht.

2. Zettwender nach Anspruch 1, **dadurch gekennzeichnet, dass** die Ventileinrichtung (22) so ausgebildet und angeordnet ist, dass,
wenn das Druckabsperrventil (21) nicht durch die Ventileinrichtung (22) umgangen wird und den Klappzylindern (12a, 12b) ein reduzierter Druck zugeführt wird, wodurch die Bewegung der Auslegerarme (40a, 40b) auf eine Vorgewendeposition (P2) begrenzt wird,
die Bewegung des Trägerzylinders (13, 113) in einer Zwischenposition, der Vorgewendeposition (P2), begrenzt wird.

3. Zettwender nach Anspruch 1 oder Anspruch 2, **dadurch gekennzeichnet, dass** der Trägerzylinder (13) einen ersten und einen zweiten Hub (13b, 13a) umfasst und
die Ventileinrichtung (22) so ausgebildet und angeordnet ist, dass sie bei Betätigung Druck für den zweiten Hub des Trägerzylinders (13a) zuführt,
wobei sich die Ventileinrichtung (22) insbesondere dann, wenn das Druckabsperrventil (21) nicht durch die Ventileinrichtung (22) umgangen wird und den Klappzylindern (12a, 12b) ein reduzierter Druck zugeführt wird, in einem Zustand befindet, in dem die Druckzufuhr für den zweiten Hub (13a) des Trägerzylinders abgesperrt ist.

4. Zettwender nach Anspruch 1 oder 2, **dadurch gekennzeichnet, dass** der Trägerzylinder (113) als ein Einhubzylinder ausgebildet ist und das Hydrauliksystem (11) des Weiteren ein Bewegungsbegrenzungsventil (122) umfasst, das so ausgebildet und angeordnet ist, dass es die Bewegung des Trägerzylinders (113) durch Absperren der Druckzufuhr begrenzt, und
die Ventileinrichtung (22) so ausgebildet und angeordnet ist, dass sie bei Betätigung das Bewegungsbegrenzungsventil (122) umgeht, wobei
insbesondere dann, wenn das Druckabsperrventil (21) nicht durch die Ventileinrichtung (22) umgangen wird und den Klappzylindern (12a, 12b) ein reduzierter Druck zugeführt wird, das Bewegungsbegrenzungsventil (122) nicht durch die Ventileinrichtung (22) umgangen wird und sich in einem Zustand befindet, in dem die Druckzufuhr zu dem Einhub-Trägerzylinder (113) unterbrochen ist.

5. Zettwender nach einem der Ansprüche 1 - 4, **dadurch gekennzeichnet, dass** die Ventileinrichtung (22) ein Rückschlagventil umfasst, insbesondere aus einem Rückschlagventil und einem Ein/Aus-Ventil besteht.

6. Zettwender nach einem der Ansprüche 1 bis 4, **dadurch gekennzeichnet, dass** die Ventileinrichtung (22) ein erstes Rückschlagventil zum Zuführen von Druck für den zweiten Hub des Trägerzylinders (13) oder zum Umgehen des Bewegungsbegrenzungsventils (122) sowie ein zweites Rückschlagventil zum Umgehen des Druckabsperrventils (21) umfasst.

7. Zettwender nach einem der Ansprüche 1 bis 6, **dadurch gekennzeichnet, dass** die Klappzylinder (12a, 12b) doppeltwirkende Einhub-Klappzylinder sind.

8. Zettwender nach einem der Ansprüche 1 bis 7, **dadurch gekennzeichnet, dass** das Druckabsperrventil (21) so eingerichtet ist, dass Druck des Trägerzylinders (13, 113) nicht durch das Druckabsperrventil (21) begrenzt werden kann.

9. Zettwender nach einem der Ansprüche 1 bis 8, **dadurch gekennzeichnet, dass** der Trägerzylinder (13, 113) zum Einstellen der Trägerbalken (4a-4e) in Bezug auf den Hauptrahmen (2) auf wenigstens drei verschiedene Positionen ausgebildet ist.

10. Zettwender nach einem der Ansprüche 1 bis 9, **dadurch gekennzeichnet, dass** das Hydrauliksystem (11) so ausgebildet ist, dass es den Zettwender (1) einstellt:
auf eine Arbeitsposition (P1), wenn der Hydraulikkreis (11) drucklos ist,
auf eine Vorgewendeposition (P2), wenn der Hydraulikkreis (11) mit Druck beaufschlagt wird und die Ventileinrichtung (22) nicht betätigt wird, und
auf eine Transportposition (P3), wenn der Hydraulikreis (11) mit Druck beaufschlagt wird und die Ventileinrichtung (22) betätigt wird.

11. Zettwender nach Anspruch 10, wobei die Ventileinrichtung (22) so ausgebildet und angeordnet ist, dass in der Vorgewendeposition (P2)
der zweite Hub des Trägerzylinders (13a) von dem Druck des Hydraulikkreises (11) entkoppelt ist und für den ersten Hub des Trägerzylinders (13b) Druck so zugeführt wird, dass nur bei dem ersten Hub des Trägerzylinders (13b) eingefahren wird, und
das Druckabsperrventil (21) den Druck der Klappzylinder (12a, 12b) so begrenzt, dass die Klappzylinder (12a, 12b) teilweise eingefahren werden.

12. Zettwender nach Anspruch 10 oder 11, wobei die Ventileinrichtung (22) so ausgebildet und angeordnet ist, dass in der Transportposition (P3)
für den zweiten Hub und den ersten Hub des Trägerzylinders (13b, 13a) Druck so zugeführt wird, dass bei dem ersten Hub und dem zweiten Hub des Trägerzylinders eingefahren wird, oder bei einem Einhub-Trägerzylinder (113) das Bewegungsbegrenzungsventil (122) umgangen wird und der Trägerzylinder mit Druck beaufschlagt wird, und
das Druckabsperrventil (21) umgangen wird und den Klappzylindern (12a, 12b) Druck des Hydrauliksystems (11) so zugeführt wird, dass die Klappzylinder (12a, 12b) insbesondere vollständig eingefahren werden.

13. Zettwender nach einem der Ansprüche 10 bis 12,
**dadurch gekennzeichnet, dass** das Hydrauliksystem (11) ein Sicherheitsventil (23) umfasst, das so ausgeführt ist, dass es den Druck von den Klappzylindern (12a, 12b) über einen vorgegebenen Zeitraum oder Bewegungsbereich sperrt, wenn der Zettwender (1) von der Transportposition (P3) an die Vorgewendeposition (P2) oder die Arbeitsposition (P1) bewegt wird.

14. Zettwender nach wenigstens einem der Ansprüche 1 bis 13, **dadurch gekennzeichnet, dass** die Ventileinrichtung (22) und/oder das Sicherheitsventil (23) so ausgebildet sind/ist, dass sie/es mechanisch oder elektrisch betätigt werden/wird, und/oder der Trägerzylinder (13, 113) als doppelt wirkender Zylinder ausgestaltet ist.

15. Verfahren zum Einstellen einer Arbeits-, Vorgewende- oder Transportposition (P1, P2, P3) des Zettwenders (1) nach einem der Ansprüche 1 bis 14 unter Einsatz von Hydraulikdruck, wobei
um die Transportposition (P3) einzustellen, die Ventileinrichtung (22) betätigt wird.

16. Verfahren nach Anspruch 15, das des Weiteren umfasst:
Zuführen von Druck nur für den ersten Hub des Zweihub-Trägerzylinders (13b) oder,
wenn der Trägerzylinder als ein Einhubzylinder (113) ausgebildet ist, Zuführen von Druck zu dem Trägerzylinder über ein Bewegungsbegrenzungsventil (122) und
Zuführen von begrenztem Druck zu den Klappzylindern (12a, 12b),
um damit den Zettwender (1) von einer Arbeitsposition (P1) auf eine Vorgewendeposition (P2) zu verstellen.

17. Verfahren nach Anspruch 15 oder 16, das des Weiteren umfasst:
Betätigen der Ventileinrichtung (22) und damit Zuführen von Druck für den zweiten Hub des Trägerzylinders (13a) oder Umgehen des Bewegungsbegrenzungsventils (122) sowie Umgehen des Druckabsperrventils (21), um damit den Zettwender (1) von einer Arbeitsposition (P1) oder einer Vorgewendeposition (P2) an eine Transportposition (P3) zu verstellen.

18. Verfahren nach einem der Ansprüche 15 bis 17 das des Weiteren umfasst:
Beaufschlagen des Trägerzylinders (13, 113) mit Druck und Betätigen des Sicherheitsventils (23) nach einem vorgegebenen Zeitraum oder Bewegungsbereich, um die Klappzylinder (12a, 12b) mit Druck zu beaufschlagen und damit den Zettwender (1) von einer Transportposition (P3) an eine Vorgewendeposition (P2) oder eine Arbeitsposition (P1) zu verstellen.

## Revendications

1. Faneuse (1) comprenant un châssis principal (2) pouvant être raccordé à un véhicule porteur, deux bras porte-aile pivotants (40a, 40b) comportant au moins une poutre porteuse (4a-4e) respectivement orientée transversalement à la direction de déplacement (X), une pluralité de rotors (5) agencés sur les poutres porteuses (4a-4e) pour le fanage et le retournement du matériel récolté et un système hydraulique (11), dans laquelle
le système hydraulique (11) comprend deux vérins de repliage (12a, 12b) destinés à replier les bras porte-aile (40a, 40b), et
une soupape d'obturation de pression (21) destinée à limiter la pression hydraulique des vérins de repliage (12a, 12b),
dans laquelle le système hydraulique (11) comprend en outre
un vérin porteur (13, 113) destiné à soulever les poutres porteuses (4a-4e) par rapport au châssis principal (2), et
un moyen de soupape (22) qui est formé et agencé pour contourner la soupape d'obturation de pression (21) lors de l'actionnement.

2. Faneuse selon la revendication 1, **caractérisée en ce que** le moyen de soupape (22) est formé et agencé de sorte que
lorsque la soupape d'obturation de pression (21) n'est pas contournée par le moyen de soupape (22) et une pression réduite est fournie aux vérins de repliage (12a, 12b), limitant ainsi le mouvement des bras porte-aile (40a, 40b) vers une position de tournière (P2),
le mouvement du vérin porteur (13, 113) est limité dans une position intermédiaire, la position de tournière (P2).

3. Faneuse selon la revendication 1 ou la revendication 2, **caractérisée en ce que** le vérin porteur (13) comprend une première et une seconde course (13b, 13a), et
le moyen de soupape (22) est formé et agencé pour fournir une pression à la seconde course du vérin porteur (13a) lors de l'actionnement,
dans laquelle, en particulier lorsque la soupape d'obturation de pression (21) n'est pas contournée par le moyen de soupape (22) et une pression réduite est fournie aux vérins de repliage (12a, 12b), le moyen de soupape (22) se trouve dans un état dans lequel l'alimentation en pression de la seconde course (13a) du vérin porteur est coupée.

4. Faneuse selon la revendication 1 ou 2, **caractérisée en ce que** le vérin porteur (113) est formé sous forme d'un vérin à une course, et le système hydraulique (11) comprend en outre une soupape de limitation de mouvement (122), qui est formée et agencée pour limiter le mouvement du vérin porteur (113) en coupant l'alimentation en pression, et
le moyen de soupape (22) est formé et agencé pour contourner la soupape de limitation de mouvement (122) lors de l'actionnement, dans laquelle en particulier lorsque la soupape d'obturation de pression (21) n'est pas contournée par le moyen de soupape (22) et une pression réduite est fournie aux vérins de repliage (12a, 12b), la soupape de limitation de mouvement (122) n'est pas contournée par le moyen de soupape (22) et se trouve dans un état tel que l'alimentation en pression du vérin porteur à une course (113) est coupée.

5. Faneuse selon l'une quelconque des revendications 1 à 4, **caractérisée en ce que** le moyen de soupape (22) comprend une soupape anti-retour, en particulier consiste en une soupape anti-retour et une soupape tout-ou-rien.

6. Faneuse selon l'une quelconque des revendications 1 à 4, **caractérisée en ce que** le moyen de soupape (22) comprend une première soupape anti-retour destinée à fournir une pression à la seconde course du vérin porteur (13) ou à contourner la soupape de limitation de mouvement (122), et une seconde soupape anti-retour destinée à contourner la soupape d'obturation de pression (21).

7. Faneuse selon l'une quelconque des revendications 1 à 6, **caractérisée en ce que** les vérins de repliage (12a, 12b) sont des vérins de repliage à une course et à double action.

8. Faneuse selon l'une quelconque des revendications 1 à 7, **caractérisée en ce que** la soupape d'obturation de pression (21) est agencée de sorte que la pression du vérin porteur (13, 113) ne peut pas être limitée par la soupape d'obturation de pression (21).

9. Faneuse selon l'une quelconque des revendications 1 à 8, **caractérisée en ce que** le vérin porteur (13, 113) est formé pour régler les poutres porteuses (4a-4e) par rapport au châssis principal (2) dans au moins trois positions différentes.

10. Faneuse selon l'une quelconque des revendications 1 à 9, **caractérisée en ce que** le système hydraulique (11) est formé pour régler la faneuse (1),
dans une position de travail (P1) si le circuit hydraulique (11) est sans pression, dans une position de tournière (P2) si le circuit hydraulique (11) est chargé d'une pression et le moyen de soupape (22) n'est pas actionné, et
dans une position de transport (P3) si le circuit hydraulique (11) est chargé d'une pression et le moyen de soupape (22) est actionné.

11. Faneuse selon la revendication 10, dans laquelle le moyen de soupape (22) est formé et agencé de sorte que dans la position de tournière (P2),
la seconde course du vérin porteur (13a) est découplée de la pression du circuit hydraulique (11) et la première course du vérin porteur (13b) est alimentée en pression de sorte que seule la première course du vérin porteur (13b) est rétractée, et
la soupape d'obturation de pression (21) limite la pression des vérins de repliage (12a, 12b) de sorte que les vérins de repliage (12a, 12b) sont partiellement rétractés.

12. Faneuse selon les revendications 10 ou 11, dans laquelle le moyen de soupape est formé et agencé de sorte que dans la position de transport (P3),
la seconde course et la première course du vérin porteur (13b, 13a) sont alimentées en pression de sorte que la première et la seconde course du vérin porteur (13b, 13a) sont rétractées, ou, dans le cas d'un vérin porteur à une course (113), la soupape de limitation de mouvement (122) est contournée et le vérin porteur (113) est alimenté en pression, et
la soupape d'obturation de pression (21) est contournée et les vérins de repliage (12a, 12b) sont alimentés en pression du système hydraulique (11) de sorte que les vérins de repliage (12a, 12b) sont en particulier entièrement rétractés.

13. Faneuse selon l'une des revendications 10 à 12,
**caractérisée en ce que** le système hydraulique (11) comprend une soupape de sécurité (23) qui est configurée pour bloquer une pression depuis les vérins de repliage (12a, 12b) lorsque la faneuse (1) est déplacée de la position de transport (P3) vers la position de tournière (P2) ou la position de travail (P1) pendant une durée prédéterminée ou sur une plage de mouvement prédéterminée.

14. Faneuse selon au moins l'une des revendications 1 à 13, **caractérisée en ce que** le moyen de soupape (22) et/ou la soupape de sécurité (23) sont formés pour être actionnés mécaniquement ou électriquement, et/ou
le vérin porteur (13, 113) est conçu sous forme d'un vérin à double action.

15. Procédé de réglage d'une position de travail, de tournière ou de transport (P1, P2, P3) de la faneuse (1) selon l'une des revendications 1 à 14, en utilisant une pression hydraulique, dans lequel
afin de régler la position de transport (P3), le moyen de soupape (22) est actionné.

16. Procédé selon la revendication 15, comprenant en outre :
l'alimentation en pression uniquement de la première course du vérin porteur à deux courses (13b), ou
dans le cas où le vérin porteur est formé sous forme d'un vérin à une course (113), l'alimentation en pression du vérin porteur via une soupape de limitation de mouvement (122), et
l'alimentation en pression limitée des vérins de repliage (12a, 12b),
de manière à régler la faneuse (1) d'une position de travail (P1) vers une position de tournière (P2).

17. Procédé selon la revendication 15 ou 16, comprenant en outre l'actionnement du moyen de soupape (22), alimentant ainsi en pression la seconde course du vérin porteur (13a), ou le contournement de la soupape de limitation de mouvement (122) et le contournement de la soupape d'obturation de pression (21), de manière à régler la faneuse (1) d'une position de travail (P1) ou d'une position de tournière (P2) vers une position de transport (P3).

18. Procédé selon l'une quelconque des revendications 15 à 17, comprenant en outre la fourniture au vérin porteur (13, 113) d'une pression et, après une durée prédéterminée ou une plage de mouvement prédéterminée, l'actionnement de la soupape de sécurité (23) afin de fournir de la pression aux vérins de repliage (12a, 12b), de manière à régler la faneuse (1) d'une position de transport (P3) vers une position de tournière (P2) ou une position de travail (P1).
